# EUROPEAN PATENT APPLICATION

(11) **EP 4 466 995 A1**
(43) Date of publication of application: **27.11.2024**
(21) Application number: 23174748.6
(22) Date of filing: 23.05.2023
(51) Int. Cl.: A01M 29/12

(54) **APPARATUS AND METHOD FOR EXPELLING AND/OR EXTINCTION OF BURROWING PESTS**

(71) Applicant: Polleunis, Marc, 3470 Kortenaken (BE)
(72) Inventor: Polleunis, Marc, 3470 Kortenaken (BE)
(74) Representative: IP HILLS NV

(57) **Abstract**

An apparatus 1 for expelling and/or extinction of burrowing pests is provided. The apparatus comprises a chamber 10 for receiving odoriferous solids, said chamber having at least three entrances. The apparatus comprises
- a first element 100 housing a ventilator 110, the ventilator is adapted to suck ambient air into the chamber;
- a second tubular element 200 being adapted to guide a gaseous fluid from the chamber into a burrow;
- the third entrance having a closable aperture 131 adapted to allow insertion and removal of odoriferous solids into and out of said chamber.

Each of the first and the second entrance of this chamber is provided with a first air-permeable barrier 151, 152 adapted to prevent odoriferous solids to pass the entrance into the element coupled to the entrance.

## Description

### Field of the Invention

The present invention generally relates to apparatuses for expelling and/or extinction of burrowing pests, and methods to expel and/or extinct of burrowing pests.

### Background of the Invention

Moles and other burrowing pests are often a nuisance and concern for gardeners and farmers. combating such pests is difficult and labour intensive. Therefore many attempts have been made in the past to make suitable devices, which are convenient and efficient.

Because the moles and other burrowing pests can appear anywhere on the field or in the garden, the device must be movable. Many devices are based on the generation of flue gases, which are blown into the burrows or tunnel system.

Other devices use odoriferous substances, the released odour of it being blown into the burrows or tunnel system. As an example, DE202010016553U discloses a portable system having a two-part tubular shaft in which a holder for holding odoriferous substances is provided. After having inserted the end of the lower part of the tubular shaft in the burrow, and the odoriferous substances being provided in the holder, the upper part of the tubular shaft is to be mounted on the lower part. Only then the ventilator is activated to blow ambient air into the burrow. The odoriferous substances are held in an annular space surrounding a tubular passing via which the air passed downwards, is to provide its odour to the air passing. The odour hence first must evaporate or escape upwards from the annular space and rise upwards in order to be blended in the air passing to the burrow. The device is to be dismantled completely, before odoriferous substances remaining after use can be evacuated from this annular space. During displacing the device loaded with odoriferous substances, care must be taken that no odoriferous substances is spilled into the tubular passing.

### Summary of the Invention

It is an objective of the present invention to provide an apparatus which is easy to install and use for expelling and/or extinction of burrowing pests, which may be displaced from one burrow to another while being loaded with odoriferous substances, which may allow easily to remove remaining odoriferous substances after use without the need of dismantling the apparatus, and which may be stored safely and odour-free.

According to a first aspect of the invention, an apparatus for expelling and/or extinction of burrowing pests is provided. The apparatus comprises a chamber for receiving odoriferous solids, said chamber having at least three entrances. The apparatus comprises
- a first element, having a first and a second end, said first element housing a ventilator, the ventilator is adapted to suck ambient air, taken via the first end, and blow said air through the second end into the first entrance of the chamber;
- a second tubular element having a first and a second end, said second tubular element being adapted to guide a gaseous fluid from its first end being adapted to couple to the second entrance of the chamber to its second end, said second end being adapted to be inserted in a burrow;
- the third entrance having a closable aperture adapted to allow insertion and removal of odoriferous solids into and out of said chamber,
   each of the first and the second entrance of said chamber being provided with a first air-permeable barrier adapted to prevent odoriferous solids to pass the entrance into the element coupled to the entrance.

According to some embodiments, the first element may be a first tubular element providing said first and said second end, said ventilator is adapted to suck ambient air, taken via the first end, and blow said air, through the second end, said second end being adapted to couple to the first entrance of the chamber.

Hence according to particular embodiments of the first aspect of the invention, an apparatus for expelling and/or extinction of burrowing pests is provided. The apparatus comprises a chamber for receiving odoriferous solids, said chamber having at least three entrances. The apparatus comprises
- a first tubular element having a first and a second end, said first tubular element housing a ventilator, the ventilator is adapted to suck or displace ambient air taken via the first end and blow said air through the second end, said second end being adapted to couple to the first entrance of the chamber;
- a second tubular element having a first and a second end, said second tubular element being adapted to guide a gaseous fluid from its first end being adapted to couple to the second entrance of the chamber to its second end, said second end being adapted to be inserted in a burrow;
- the third entrance having a closable aperture adapted to allow insertion and removal of odoriferous solids into and out of said chamber.
Each of the first and the second entrance of this chamber is provided with a first air-permeable barrier adapted to prevent odoriferous solids to pass the entrance into the tubular element coupled to the entrance.

According to some embodiments, the apparatus for expelling and/or extinction of burrowing pests may comprise
- a first tubular element having a first and a second end, said first tubular element housing a ventilator, the ventilator is adapted to suck or displace ambient air taken via the first end and blow said air taken towards and through the second end;
- a second tubular element having a first and a second end, said second tubular element being adapted to guide a gaseous fluid from its first end to its second end, said second end being adapted to be inserted in a burrow;
- a chamber for receiving odoriferous solids, said second end of the first tubular element and the first end of the second tubular element debouching in the chamber;
wherein the chamber may have a closable aperture adapted to allow insertion and removal of odoriferous solids into and out of said chamber, the chamber and the second end of the first tubular element are separated by a first air-permeable barrier adapted to prevent odoriferous solids to enter the first tubular element, and the chamber and the first end of the second tubular element are separated by a second air-permeable barrier adapted to support odoriferous solids and to prevent odoriferous solids to enter the second tubular element.

With "odoriferous solids" is meant a substance which may release a gaseous component having a pest expelling or extinction effect, the substance being provided as solid particles, powder, pellets and alike. Solid is to be understood as being in the phase different from a gaseous or liquid fluid.

The open ends are the open outer ends of the, optionally tubular, element.

According to some embodiments, the apparatus may comprise a third tubular element having a first and a second end, the second end being adapted to couple to the closable aperture and being adapted to allow insertion and removal of odoriferous solids into and out of the chamber, the first end being closed or closable.

According to some embodiments, the closable aperture may be adapted to couple to an opening of a container comprising odoriferous solids.

Possibly, the second end of the third tubular element is adapted to couple to an opening of a container comprising odoriferous solids.

The container may be a bottle or a flask in which odoriferous solids are present. The closable aperture, or the first end of the third tubular element, may comprise a receiving means to receive and couple to the finish of a bottle. As an example, the closable aperture, or the first end of the third tubular element, may comprise a receiving means provided with an inner threaded part, adapted to couple to a threaded part of the finish of a bottle.

The apparatus may comprise a set of connectors, adapted to connect a variety of bottles, vessels, containers and alike to the closable aperture, optionally to the receiving means of the closable aperture.

The apparatus may comprise a closure cap, adapted to close the closable aperture, optionally to close the receiving means of the closable aperture.

According to some embodiments, the first barrier may comprise one or more layers of metal or polymer grid, each spanning the second end of the first, optionally tubular, element.

In case of more than one layer of grid, the meshes of the grids may be non-aligned. The grids may be mutually different, e.g. have different mesh sizes, or may be identical grids.

This first barrier avoids that odoriferous solids when being present in the chamber, to move into the first, optionally tubular, element, even up to the ventilator, when the apparatus is not in a working status (the ventilator being not activated), e.g. when the apparatus is manipulated, e.g. prepared to have its second end of the second tubular element being inserted in a burrow, or when the apparatus is stored for later use. The presence of odoriferous solids in the first, optionally tubular, element may cause hindrance in the functioning of the apparatus during later use, or odour nuisance when the apparatus is stored.

According to some embodiments, the second barrier may comprise one or more layers of metal or polymer grid, each spanning the first end of the second tubular element.

In case of more than one layer of grid, the meshes of the grids may be non-aligned. The grids may be mutually different, e.g. have different mesh sizes, or may be identical grids.

This second barrier avoids that odoriferous solids when being present in the chamber, to move into the second tubular element, even up to the ventilator, when the apparatus is not in a working status (the ventilator being not activated), e.g. when the apparatus is manipulated, e.g. prepared to have its second end of the second tubular element being inserted in a burrow, or when the apparatus is stored for later use. This second barrier also avoids that odoriferous solids are dragged along with the ambient air being provided in the chamber by the ventilator and leaving the chamber as a malodorous or smelly air flow into the second tubular element, and further into the borrow via the second end of the second tubular element.

Hence the odoriferous solids may release its scent to the air which is provided by the ventilator in the chamber, this air leaving the chamber via the second tubular element, while the solid carrier of the scent is kept in the chamber and/or the odoriferous solids are kept in the chamber until its particle size can pass through the second barrier. The latter is in particularly relevant if the odoriferous solids decreased in dimension or reacts which changing from solid state to gaseous state, when being subjected to an air flow. These particles may be small enough to provide no further hinder when released in nature, by choosing the mesh size of the second barrier carefully.

The first and/or second barrier may have the shaped of a spherical cap or even a hemisphere. The first and/or second barrier may be provided at the entrance of the chamber such the apex of the spherical cap is oriented inwards the chamber.

According to some embodiments, the chamber may have a T- or Y-shape, the first, optionally tubular, element debouching in a first of the arms of the T- or Y-shape, the second tubular element debouching in a second of the arms of the T- or Y-shape, the closable aperture being in fluid communication with the third arm of the T- or Y - shape. According to some embodiments, the angle between the first and second arm of the T- or Y-shape is more than or equal to 90°, and the angle between the third and second arm of the T- or Y-shape is more than or equal to 90°. Preferably the angle between the first and second arm of the T- or Y-shape is about equal to 180°. The angle between the third and second arm of the T- or Y-shape is in the range of 100° to 170°, more preferred in the range of 115° to 160°, like 135°.

According to some embodiments, the second end of the second tubular element and/or the first end of the first, optionally tubular, element may be closable.

The apparatus may comprise further closure caps, adapted to close the first end of the first, optionally tubular, element and/or the second end of the second tubular element.

As an example, the first end of the first, optionally tubular, element may be provided with screw thread at its outer surface, allowing a cap to be screwed on, hence closing the first end of the first, optionally tubular, element. Alternatively the first end of the first, optionally tubular, element may be provided with screw thread at its inner surface, allowing a cap to be screwed in, hence closing the first end of the first, optionally tubular, element.

Similarly, the second end of the second tubular element may be provided with screw thread at its inner surface, allowing a cap to be screwed in, hence closing the second end of the second tubular element. Alternatively the second end of the second tubular element may be provided with screw thread at its outer surface, allowing a cap to be screwed on, hence closing the second end of the second tubular element.

The provision of closure caps for the first end of the first, optionally tubular, element, for the second end of the second tubular element and/o for the closable aperture, and preferably for ends and the aperture, decreases the risk on odour nuisance when the apparatus is stored.

The tubular elements may be polymeric or metal tubes or channels, e.g. polymeric tubes like drainpipes or alike. Preferably the tubular elements have a circular radial cross section.

The first, optionally tubular, element may comprise a ventilation chamber to house the ventilator. This chamber may have a larger diameter or open cross section as compared to the other sections of the first, optionally tubular, element. The ventilation chamber may provide the first end of the first, optionally tubular, element, or may be present as a local thickening along the length of the first, optionally tubular, element.

The second tubular element may be a tube, e.g. a polymeric or metal tube, e.g. a drainpipe or alike. Preferably the second tubular element has a circular radial cross section. Preferably the second tubular element has a radial cross section being identical along the length of the second tubular element.

Most preferably the first and second tubular element are similar, even identical, in material. Possibly the first and second tubular element are similar, even identical, in shape. Most preferably the radial cross section of the part of the first, optionally tubular, element providing the second end of the first, optionally tubular, element, and the radial cross section of the part of the second tubular element providing the first end of the second tubular element, is identical.

The closable aperture of the chamber may have a circular circumference. In case a third tubular element having a first and a second end is used to couple to the closable aperture. This third tubular element may be a tube, e.g. a polymeric or metal tube, e.g. a drainpipe or alike. Preferably the third tubular element has a circular radial cross section. Preferably the third tubular element has a radial cross section being identical along the length of the third tubular element. Most preferably the radial cross section of the third tubular element, and the radial cross section of the part of the second tubular element providing the first end of the second tubular element, is identical.

The chamber may be a T-shaped or Y-shaped connector for connecting tubes. The arms of the shape may be of a tubular shape, and having diameters, optionally identical or mutually different, to receive, hold and couple to the first, second and optionally also the third tubular element. When drainpipes are used to provide the first, second and optionally the third tubular element, a Y-shaped connector may be used, provided the first and second air-permeable barriers are provided.

The length, the width, if applicable the diameters, and the material of the tubular elements and the chamber may be chosen to provide an ergonomic apparatus. The use of a lightweight material, e.g. polymer, like polyamide (PA), polyester (PES) or polyvinylchloride (PVC), for the tubular elements, as well as the chamber, is preferred.

The part of the first, optionally tubular, element providing the first end of the first, optionally tubular, element may be shaped such that, when in use, no rain or water may enter the first, optionally tubular, element via this first end. The part of the first, optionally tubular, element providing the first end of the first, optionally tubular, element may be provided with a cowl, to avoid rain falling into the upwards oriented first end of the first, optionally tubular, element. The part of the first, optionally tubular, element providing the first end of the first, optionally tubular, element may be curved, such that the first end is no longer oriented upwards but sideways, preferably more than 90° sideways, e.g. more than or equal to 135° sideways, or even downwards when the apparatus is installed in a borrow.

For use of the apparatus with some particular odoriferous solids, the ambient air provided to the odoriferous solids should preferably be rather humid. Therefore the apparatus may comprise a humidifying system to bring humidity into the ambient air sucked by the ventilator. Humidifying system this humidifying system may be installed upstream the ventilator, or may be installed off stream the ventilator, e.g. between the ventilator output side and the first barrier.

Optionally, the first, optionally tubular, element is shaped that the first end, once the apparatus is installed in a burrow, is positioned close to the ground level, e.g. is present at maximum at 10 cm above the ground level, e.g. at maximum at 5 cm above the ground level. The apparatus may be used to expelling and/or extinction of burrowing pests in lawns and is preferably used over night or in the morning. At that moment, the lawn becomes or is relatively humid, e.g. by dew. When the first end is positioned close to the lawn, the air sucked via the first end will carry along part of the humidity present on the lawn. In case the ground, e.g. the lawn is not wet enough, water van be provided at this ground level near or at the position of the first end, such that this water can be sucked as humidity along with the air being taken in by the ventilator. To provide this position of the first end, the first, optionally tubular, element may comprise a tube making an 180° turn downwards.

According to some embodiments, the first end of the first, optionally tubular, element may be oriented downwards upon vertically inserting of the second end of the second tubular element in a burrow. According to some embodiments, the ventilator may be housed at or near the first end of the first, optionally tubular, element, the first, optionally tubular, element comprising one or more legs to support the first end of the first, optionally tubular, element in the ground after vertically inserting of the second end of the second tubular element in a burrow.

Such setup may provide a more stable mounting of the apparatus with its second end of the second tubular element inserted in a burrow.

The ventilator may be an electrical ventilator, preferably working on low tension direct current, e.g. working on 12V to 18V electrical direct current. Preferably the ventilators are used, which may be used as cooling ventilators in IT hardware. The ventilator preferably does not consume too much current, e.g. only 0.2 to 1 ampere, usually between 0.2 and 0.8 ampere. As such, the apparatus may further comprise a battery for storing electrical power, hereafter referred to as on-board battery. This battery may be a low tension battery, like a 12V, 14.5V or 18V power battery. As a mere example, an 18V battery providing 2Ah) may be used. Additionally or alternatively, the apparatus may comprise a connector to connect an external battery to the apparatus, e.g. to allow connecting a 12V battery of a car or riding mower. Additionally or alternatively, the apparatus may comprise a cable itself, connected directly to the apparatus or for connecting the apparatus via a connector, to an external battery to the apparatus, e.g. to allow connecting a 12V battery of a car or riding mower.

The apparatus further may comprise a switch to activate and deactivate the apparatus, in particularly the ventilator. The apparatus may further comprise a central processing unit to control the activity of the powered apparatus. The central processing unit may comprise a timer to switch the apparatus off after a given, optionally adjustable time after starting the activation. The apparatus hence may have an interface to communicate with the used, e.g. to show the time period remaining until the pre-set time lapse has passed.

According to some embodiments, the apparatus further may comprise at least one anchoring element, adapted to anchor the apparatus on the ground when the second end of the second tubular element is inserted in a burrow.

Such anchoring elements may e.g. be rods, like steel rods which can be inserted in the ground at one end of the rod, while the rod may be inserted in loops or rings projection aside the apparatus, e.g. pad eyes and alike. As an example one or more 8mm steel, like stainless steel, rods may be used to anchor the apparatus. The rods may be provided with a handgrip to push the rod into the ground more easily.

When the ventilator is housed at or near the first end of the first, optionally tubular, element and the first, optionally tubular, element comprising one or more legs to support the first end of the first, optionally tubular, element in the ground after vertically inserting of the second end of the second tubular element in a burrow, the rod may be inserted in loops or rings projection aside the first end of the first, optionally tubular, element. Such setup may provide an even more stable mounting of the apparatus with its second end of the second tubular element inserted in a burrow.

The second tubular element has its second end being adapted to be inserted, pushed or planted substantial vertically in a burrow, e.g. via a molehill into a burrow of a mole's tunnel system. The second end may be provided with additional small apertures in the tubular element at the part near the outer boarder of the second tubular element, also referred to as the end section. The outer border may be serrated to facilitate the insertion of the second end in the ground, hence into the burrow. The part near the outer boarder of the second tubular element may be tapered towards the end. This tapered and/or perforated part may have a length of e.g. 2 to 5 cm.

When the apparatus comprises a cap to close the second end of the second tubular element, this cap must be adapted to close the perforations in this end section.

The apparatus can be installed very quickly, withing some minutes, and has a high efficiency, close to 100%. The apparatus can be easily moved from one place to another and is easy to store. Loading the odoriferous solids can be done fairly simple by opening the aperture and pouring in the odoriferous solids, even when the apparatus is already installed. Alternatively, when the odoriferous solids are provided in a bottle or flask or similar container, the container may be coupled to the aperture before the apparatus is installed. By installing the apparatus, the odoriferous solids may flow into the chamber where it can release its odour when air is passing through the odoriferous solids. When the treatment is finished, the odoriferous solids remaining in the chamber can be poured back into the container by turning the apparatus such the container is below the aperture in the chamber. As such no odoriferous solids remains in the apparatus, and the apparatus can be moved or stored safely, while being free of remaining odoriferous solids, optionally with closed ends and apertures.

According to a further second aspect of the invention, a method to expelling and/or extinction of burrowing pests is provided. The method comprises
∘ providing an apparatus according to any one of the preceding claims;
∘ providing odoriferous solids to the apparatus;
∘ inserting the second end of the second tubular element in a burrow;
∘ activating the ventilator.

According to some embodiments, the odoriferous solids may be chosen from the group consisting of
- solids comprising aluminium phosphide (Quickphos);
- carbide solids, preferably CaC2 solids;
- chlorine solids;
- mole expelling powders;
- garlic powders; and
- mixtures thereof.

The method may comprise the step of finding a burrow prior to inserting the second end of the second tubular element into this burrow.

The method may comprise the step of anchoring the apparatus once the second end of the second tubular element is inserted into this burrow.

According to some embodiments, the odoriferous solids may be carbide solids, preferably CaC2 solids, the method further comprises increasing the humidity of the ambient air sucked by the ventilator prior to entering or during transport of the ambient air in the first, optionally tubular, element.

According to some embodiments, the odoriferous solids may be provided in a container, preferably a bottle of flask, the step of providing odoriferous solids to the apparatus comprises coupling an opening of the container to the closable aperture off the apparatus.

Optionally, balls, marbles, stones or stone particles or similar solids larger than the odoriferous solids may be added to the odoriferous solids to increase the release of odour when air is passing via the chamber of the apparatus. The balls, marbles, stones or stone particles or similar solids may be provided in the chamber as a separate product or may be part of the odoriferous solids being provided in the chamber. During the method of using this apparatus, the combination of the balls, marbles, stones or stone particles or similar solids and the odoriferous solids may be shaken before and optionally once in a while during use, in order to release the odours more efficient.

Optionally, an agitator, e.g. an electrically driven agitator, like a stirrer, may be used in the chamber to stir up the odoriferous solids when air is passing via the chamber of the apparatus. Optionally, a device creating swirl or turbulence is provided in the chamber, in order to increase the release of odour to the air passing through the chamber. Additionally or alternatively, the elements and parts of the apparatus are coupled such that, in use, the air from the first, optionally tubular, element flows thought the chamber in a non-vertically downwards direction, preferably even substantially vertically upwards. The odoriferous solids, when air is passing via the chamber of the apparatus, are dragged along with the air from the first, optionally tubular, element while gravity will force them to fall down again. This may cause some turbulence or swirl in the chamber; hence the chamber may function like a fluidized bed. The release of odour to the air passing through the chamber may be increased and made more efficient.

According to some embodiments, the odoriferous solids may be returned to a container, preferably a bottle of flask, after the ventilator is deactivated.

It is understood that the features described in relation to the apparatus according to the first aspect of the invention, may be combined with one or more features described in relation to the method according to the second aspect of the invention, and vice versa.

### Brief Description of the Drawings

Fig. 1 illustrates schematical a perspective view of an apparatus according to the invention.
Fig. 2 illustrates schematical a cross section of the apparatus of figure 1.
Fig. 3 illustrates schematical an exploded view of the apparatus of figure 1.
Fig. 4a and 4b illustrate schematical a perspective view of an alternative apparatus according to the invention.

In the different figures, the same reference sign refers to the same or a similar feature.

### Detailed Description of Embodiment(s)

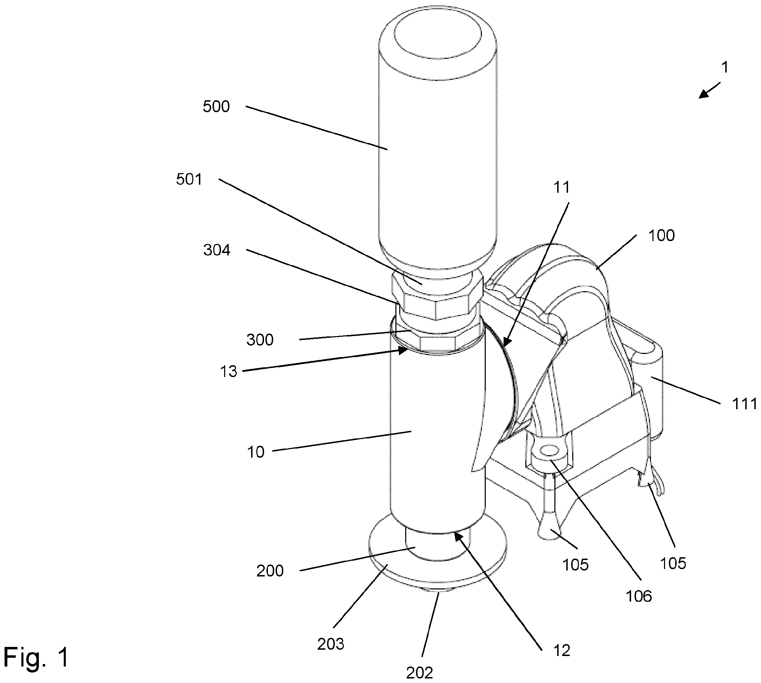

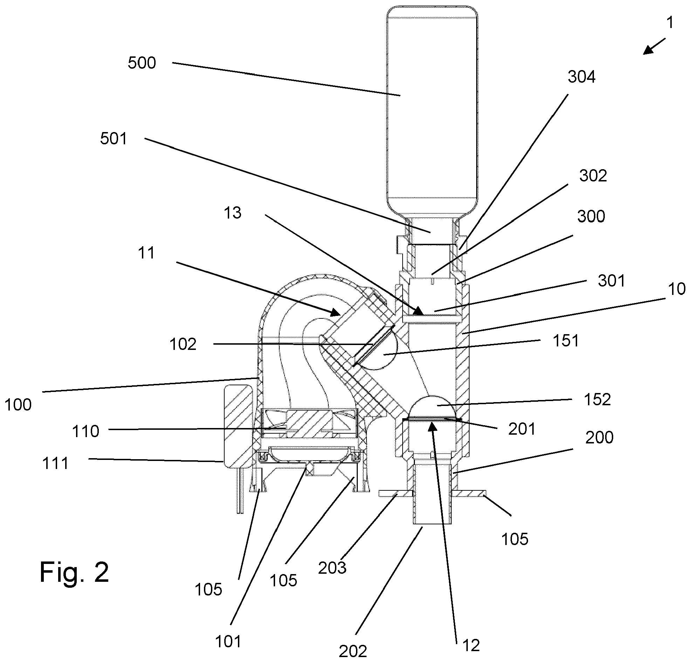

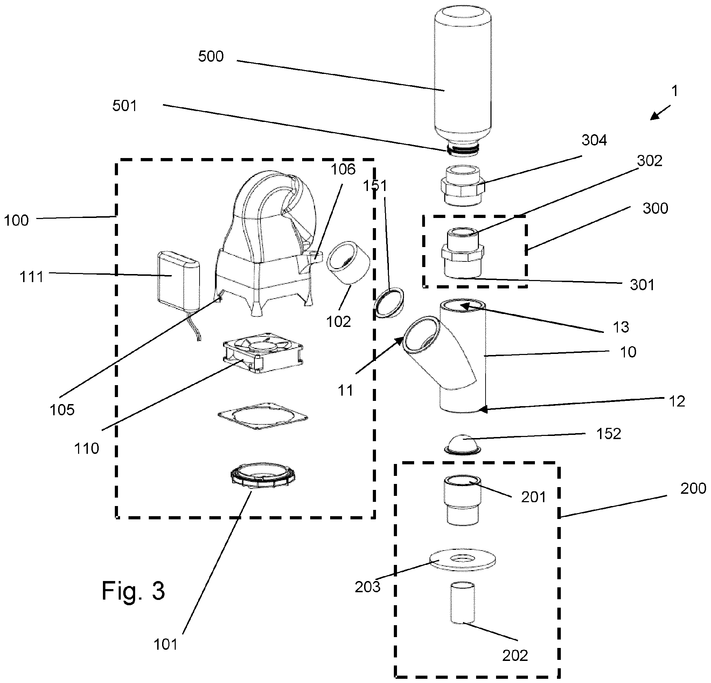

An apparatus 1 for expelling and/or extinction of burrowing pests is schematically shown in figures 1, 2 and 3. The apparatus 1 comprises a chamber 10 for receiving odoriferous solids. This chamber is a Y-shaped chamber made from polymeric material, e.g. from polyester or polyamide, of from a composite material comprising these polymeric materials and reinforcing fibers, like glass fibers. The chamber has three entrances 11, 12 and 13.

The apparatus 1 comprises a first tubular element 100, having a first 101 and a second 102 end. In the first tubular element, at the first end 101, a ventilator 110 is housed. This ventilator 110 can displace ambient air taken via the first end 101 and blow this air through the second end 102. The second end 102 is coupled to the first entrance 11 of the chamber 10. The ventilator 110 is driven by a battery 111, which is electrically connected to the ventilator 110. The chamber 10 having a Y-shape has its first entrance, coupled to this first tubular element at a first of the arms of the Y-shape. The first tubular element debouches in this first of the arms of the Y-shape.

The apparatus 1 may comprise an electronical circuit and a controller (not shown), to control the activity of the apparatus. Amongst others, the electronical circuit and controller may comprise a switch to activate and deactivate the apparatus, hence the ventilator. The circuit and controller may comprise a timer to switch off the ventilator after this ventilator is active for a given, predetermined time lapse, and or to switch the apparatus to the active mode after a given time lapse. The circuit and controller may comprise an interface to monitor the proceeding of the action of the apparatus, e.g. the time having lapsed since the activation of the ventilator, and/or the time still left for the apparatus to stay active. Hence a screen may be provided. The interface may also allow to set the activation time manually. The circuit and controller may comprise a battery control and/or status indicator. The battery may comprise a charging port to allow the battery to be recharged by energy taken from the grid or from another battery, e.g. a power battery from a vehicle, an agricultural device, a power generator or electric mower. The apparatus may comprise tell-tale lights to indicate its status, these lights being controlled by the electrical circuit and controller.

The ventilator 110 itself is an electrical ventilator, working on 12V to 18V direct current, and consumes between 0.2 and 0.8 ampere. The battery 111 is 12V, 14.5V or 18V power battery.

In this embodiment, the first tubular element 100, being made from e.g. polymeric material, comprises a curved path, such that the first end 101 of the first tubular element 100 is oriented downwards upon vertically inserting of the second end 202 of the second tubular element 202 in a burrow. At the first end 101 of the first tubular element 100, four legs 105 are provided, which are to support the apparatus on the ground when the second end 202 of the second tubular element 202 in inserted in a burrow.

The apparatus 1, in particularly the first tubular element 100, comprises two loops 106, adapted for a rod to be inserted in these loops, the loops projecting aside the first end of the first tubular element. The loops are present at the side of the first tubular element closest to the second tubular element 200. Such setup may provide an even more stable mounting of the apparatus with its second end of the second tubular element inserted in a burrow.

The apparatus 1 comprises a second tubular element 200, also having a first 201 and a second 202 end. The second tubular element may be provided from polymeric material. This second tubular element is adapted to guide a gaseous fluid from its first end 201 being couple to the second entrance 12 of the chamber 10 to its second end 202. This second end 202 is to be inserted in a burrow. At the second end 202, a flange 203 may be provided to limit the depth of the insertion of this second tubular element 200 in the burrow, and to give some stability to the apparatus 1 at the position where the second tubular element 200 is inserted in the burrow, hence the ground. The second tubular element 200 is coupled to the second entrance 12 of the chamber, which in this case is located at the end of the lower of the arms of the Y-shape.

Between the first entrance 11 of the chamber 10 and the first tubular element 100, a first air-permeable barrier 151, adapted to prevent odoriferous solids to pass the entrance into the first tubular element 100 is provided. The first entrance 11 is spanned with one or more metal meshes, which have a spherical cap shape, the apex of it being oriented inwards the chamber 10. Similarly, between the second entrance 12 of the chamber 10 and the second tubular element 200, a second air-permeable barrier 152, adapted to prevent odoriferous solids to pass the entrance 12 into the second tubular element 200 is provided. The second entrance 12 is spanned with one or more metal meshes, which have a spherical cap shape, the apex of it being oriented inwards the chamber 10.

The provision of a shaped, e.g. a spherical cap shaped barrier 151 and 152, is that the odoriferous solids have less tendency to stick to the barrier. The odoriferous solids provided in the chamber by the third entrance 13, may be removed from the chamber, e.g. poured out again through this third entrance. It is relatively important that no odoriferous solids remain stuck in the chamber. By the provision of a shaped barrier, and also by the provision of the apex oriented inwards the chamber, the risk on odoriferous solids remaining in the chamber is minimised. When the odoriferous solids are in the chamber and rest on the second barrier 152, the provision of a larger surface as compared to a flat circular barrier, increases the amount of odour which can be dragged along from the odoriferous solids.

The chamber 10 has a third entrance 13 with a closable aperture 131, which can be closed, and which in this embodiment, can be coupled to a flask 500 in which odoriferous solids are stored. A third tubular element 300 . This third tubular element 300 has as well a first 301 and a second 302 end. The second end 302 is adapted to couple to the closable aperture 131 and is adapted to allow insertion and removal of odoriferous solids into and out of said chamber 10.The first end 301 can be closed. The apparatus comprises an adaptor element 304 which allows the finish 501 of the flask 500 or any other bottle to be screwed on this adapter, and via this adapter being coupled to the closable aperture of the chamber 10.

The apparatus 1 can be used to expelling and/or extinction of burrowing pests, such as moles. As an example, a flask or bottle with e.g. carbide solids, preferably CaC2, is screwed on the adapter 304, the second tubular element 200 being oriented upwards in vertical direction. When the apparatus is rotated 180° downwards, such the second tubular element 200 is now oriented down in vertical direction, the carbide solids will pass though the entrance 13 into the inner void of the chamber, where their movement is limited by the second barrier 152. The apparatus can now be partially introduced in a burrow, by inserting the second end 202 of the second tubular element 200 in the burrow. The apparatus is pushed downwards until the flange 203 rests on the ground, and/or the legs 105 rest on the ground. Possibly, the apparatus is anchored to the ground by pressing anchoring pins into the loops 106. The apparatus, having a charged battery, is activated or programmed to start its action after a given lapse of time. When the apparatus is activated, the ventilator 110 will suck ambient air right above ground level through the first end 101 and blows this air in the chamber via the second end 102 and the first entrance 11. The air cannot pass through the third entrance, as its closable aperture 131is blocked and closed by the presence of the flask 500. The air blown in the chamber 10 must pass the odoriferous solids present in the chamber, which will cause the ambient air to become smelly. In case carbide solids are used, the ambient air flowing in the chamber, may comprise some humidity, especially when the apparatus is activated during night-time or at or near sunrise, when morning dew may be present on the ground. The humidity may cause the carbide to decompose and spread bad odours and gasses, like acetylene. This bad smelling air is forced to flow into the burrow via the second tubular element 200. The odoriferous solids and the other reaction products from possible decomposition of the odoriferous solids, remain on the barrier 152.

After termination of the activity, the apparatus is removed from the burrow by lifting it vertically upwards. When turning the apparatus 180° to bring the second tubular element 200 oriented upwards in vertical direction again, the remaining odoriferous solids will flow back into the flask 500. These odoriferous solids cannot pass into the first tubular element 100, as this is prevented by the presence of the first barrier 151. Hence the apparatus can be completely emptied and made fit for transport or storage.

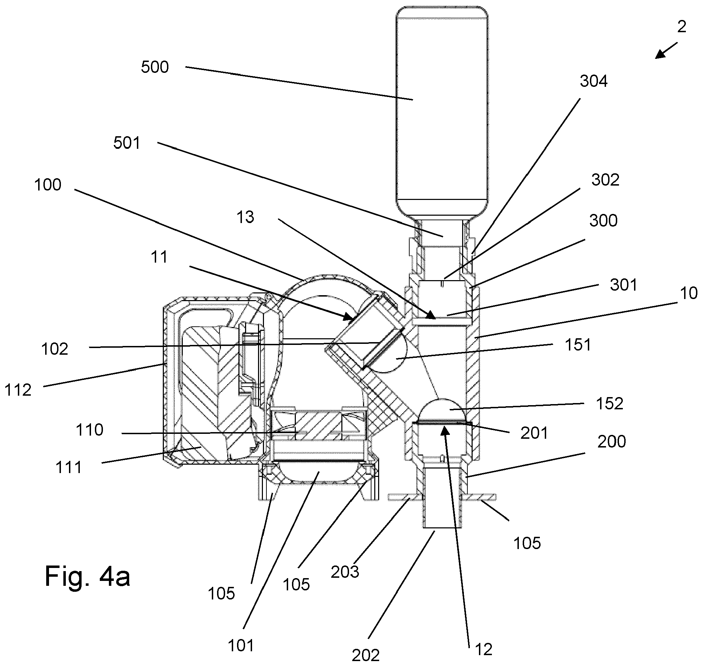

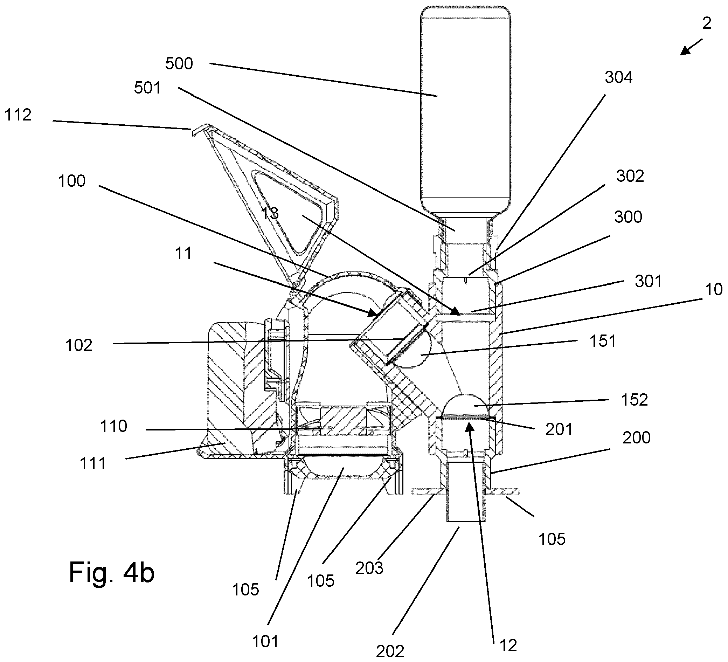

Figure 4a and 4b show an alternative apparatus 2 according to the invention. All features and elements are identical to the apparatus 1 of figures 1 to 3. The battery 111 is housed in a watertight housing 112. In figure 4a, the housing 112 is closed, while in figure 4b, the housing 112 is shown in open status, allowing the battery 111 to be taken out or to put into the housing 112.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Apparatus for expelling and/or extinction of burrowing pests, said apparatus comprises a chamber for receiving odoriferous solids, said chamber having at least three entrances, said apparatus comprising
- a first element, having a first and a second end, said first element housing a ventilator, the ventilator is adapted to suck ambient air, taken via the first end, and blow said air through the second end into the first entrance of the chamber;
- a second tubular element having a first and a second end, said second tubular element being adapted to guide a gaseous fluid from its first end being adapted to couple to the second entrance of the chamber to its second end, said second end being adapted to be inserted in a burrow;
- the third entrance having a closable aperture adapted to allow insertion and removal of odoriferous solids into and out of said chamber,
each of the first and the second entrance of said chamber being provided with a first air-permeable barrier adapted to prevent odoriferous solids to pass the entrance into the element coupled to the entrance.

2. An apparatus according to claim 1, wherein said first element is a first tubular element providing said first and said second end, said ventilator is adapted to suck ambient air, taken via the first end, and blow said air, through the second end, said second end being adapted to couple to the first entrance of the chamber.

3. An apparatus according to claim 1 or 2, wherein said apparatus comprises a third tubular element having a first and a second end, said second end being adapted to couple to the closable aperture and being adapted to allow insertion and removal of odoriferous solids into and out of said chamber, the first end being closed or closable.

4. An apparatus according to any one of the preceding claims, wherein said closable aperture is adapted to couple to an opening of a container comprising odoriferous solids.

5. An apparatus according to any one of the preceding claims, wherein said first barrier comprises one or more layers of metal or polymer grid, each spanning the second end of the first element.

6. An apparatus according to any one of the preceding claims, wherein said second barrier comprises one or more layers of metal or polymer grid, each spanning the first end of the second tubular element.

7. An apparatus according to any one of the preceding claims, wherein said chamber has a T- or Y-shape, the first element debouching in a first of the arms of the T- or Y-shape, the second tubular element debouching in a second of the arms of the T- or Y-shape, the closable aperture being in fluid communication with the third arm of the T- or Y -shape.

8. An apparatus according to claim 6, wherein the angle between the first and second arm of the T- or Y-shape is more than or equal to 90°, and the angle between the third and second arm of the T- or Y-shape is more than or equal to 90°.

9. An apparatus according to any one of the preceding claims, wherein the second end of the second tubular element and/or the first end of the first element is closable.

10. An apparatus according to any one of the claims 1 to 8, wherein the first end of the first element is oriented downwards upon vertically inserting of the second end of the second tubular element in a burrow.

11. An apparatus according to claim 9, wherein the ventilator is housed at or near the first end of the first element, the first element comprising one or more legs to support the first end of the first element in the ground after vertically inserting of the second end of the second tubular element in a burrow.

12. An apparatus according to any one of the preceding claims, wherein apparatus further comprises at least one anchoring element, adapted to anchor the apparatus on the ground when the second end of the second tubular element is inserted in a burrow.

13. A method to expelling and/or extinction of burrowing pests, the method comprises
∘ providing an apparatus according to any one of the preceding claims;
∘ providing odoriferous solids to the apparatus;
∘ inserting the second end of the second tubular element in a burrow;
∘ activating the ventilator.

14. A method according to claim 13, wherein the odoriferous solids are carbide solids, preferably CaC2 solids, the method further comprises increasing the humidity of the ambient air sucked by the ventilator prior to entering or during transport of the ambient air in the first element.

15. A method according to any one of the claims 13 to 14, wherein the odoriferous solids are provided in a container, preferably a bottle of flask, the step of providing odoriferous solids to the apparatus comprises coupling an opening of the container tot h closable aperture off the apparatus.

16. A method according to any one of the claims 13 to 15, wherein the odoriferous solids are returned to a container, preferably a bottle of flask, after the ventilator is deactivated.
